# FASCICULE DE BREVET EUROPEEN

(11) **EP 0 847 912 B1**
(45) Date de publication et mention de la délivrance du brevet: **06.03.2002**
(21) Numéro de dépôt: 97403001.7
(22) Date de dépôt: 11.12.1997
(51) Int. Cl.: B62D 21/11, B62D 21/15, B62D 35/02

(54) **Carénage sous moteur absorbeur de chocs**
Aufprallenergie absorbierendes Verkleidungsteil für die Unterseite eines Motors
Impact absorbing fairing for the underside of an automobile

(30) Priorité: 13.12.1996 FR 9615341
(43) Date de publication de la demande: 17.06.1998
(73) Titulaire: PEGUFORM FRANCE, 27950 Saint Marcel (FR)
(72) Inventeur: Renault, Thierry, 01100 Oyonnax (FR)
(74) Mandataire: Schrimpf, Robert

(56) Documents cités:
- DE-A- 3 322 061
- DE-A- 3 322 334
- DE-A- 4 440 192

## Description

La présente invention concerne un procédé de fabrication d'une pièce de fermeture sous moteur pour véhicule automobile.

Elle concerne également une pièce de fermeture sous moteur réalisée notamment par un tel procédé.

Actuellement, les pièces de fermeture sous moteur, appelées communément carénage sous moteur, qui existent sur de nombreux véhicules automobiles, sont de simples plaques réalisées en matière thermoplastique renforcée estampable, ou en SMC ou bien en polypropylène injecté, fixées à l'extrémité basse du pare-chocs et sous le moteur en appui sur le berceau moteur.

Une telle pièce de fermeture sous moteur insonorisante est décrite dans le document DE 33 22 061.

De telles pièces de fermeture comme leur nom l'indique, ont pour fonction de fermer la partie inférieure du berceau moteur pour isoler ledit moteur de l'extérieur et le protéger ainsi des chocs éventuels lors par exemple d'un passage d'un bord de trottoir, et des projections d'eau et de boue lors de la marche du véhicule. Un telle pièce de fermeture permet également d'éviter que des écoulements d'huile provenant du moteur tombent sur le sol.

Il a été récemment envisagé d'utiliser une telle pièce de fermeture sous moteur pour absorber une partie de l'énergie cinétique en cas de choc frontal, en biais ou latéral du véhicule.

Pour cela, il faut ajouter sur la plaque de fermeture des longerons s'étendant selon l'axe longitudinal du véhicule, ces longerons permettant d'absorber l'énergie cinétique en cas de choc.

Cette pièce doit absorber de l'énergie cinétique lors d'un choc de biais normalisé réalisé sur un demi-mur à une vitesse de 56 km/h.

Cette pièce de fermeture réalisée en tôle présenterait un poids de l'ordre de 6kg, ce qui est alors trop élevé pour qu'elle puisse être manipulée sur une chaîne de montage de véhicules automobiles, chaque opérateur ne devant pas porter une charge supérieure à 3kg.

En outre, cette pièce réalisée en tôle présenterait un coût de fabrication trop élevé.

Le document FR-2 548 995 homologue du document DE-3 322 334 présente une pièce de fermeture sous moteur pour véhicule conforme au préambule de la revendication 1. Il s'agit du document le plus proche de l'invention.

La présente invention propose alors un nouveau procédé de fabrication d'une pièce de fermeture sous moteur pour véhicule automobile, qui permet de réaliser une pièce légère, dont le poids est inférieur à 3 kg, destinée notamment à absorber une partie de l'énergie cinétique d'un éventuel choc frontal, en biais ou latéral du véhicule automobile.

Plus particulièrement, il est proposé selon l'invention, un procédé de fabrication d'une pièce de fermeture sous moteur pour véhicule automobile, caractérisé en ce qu'il comprend les étapes consistant à :
a ) - chauffer au moins une plaque de base de surface S, en matière plastique renforcée,
b) - estamper la plaque de base pour former une pièce intermédiaire comprenant une partie centrale plane de fermeture bordée latéralement par deux longerons de section ouverte en forme de U, fermés à chacune de leurs extrémités, et
c) - fermer l'ouverture des deux longerons en solidarisant à la pièce intermédiaire, deux plaques de fermeture positionnées respectivement sur lesdites ouvertures.

Ainsi, en choisissant de façon judicieuse la matière plastique composite de la plaque de base constituant ladite pièce de fermeture, on réalise selon l'invention à un coût relativement faible, une pièce de fermeture qui présente l'avantage d'être légère et donc facilement manipulable par un opérateur sur une chaîne de montage de véhicules automobiles.

Cette pièce de fermeture comporte deux longerons qui s'étendent selon l'axe longitudinal du véhicule, une fois la pièce de fermeture montée sous le moteur, ces deux longerons ayant pour principale fonction d'absorber une partie de l'énergie cinétique lors d'un choc frontal, en biais ou latéral du véhicule automobile.

La partie centrale plane de la pièce de fermeture permet d'une part de fermer la partie inférieure du berceau moteur pour isoler le moteur de l'extérieur et d'autre part de stabiliser les deux longerons latéraux absorbeurs d'énergie.

Des tests réalisés sur cette pièce de fermeture, ont montré qu'elle absorbait une quantité d'énergie notable (de l'ordre de 10 kJ) lors d'un choc de biais normalisé réalisé sur un demi-mur à 56 km/h. En effet, lors d'un tel choc, au moins un des longerons absorbe une partie de l'énergie cinétique du choc, en s'écrasant progressivement selon l'axe longitudinal dudit longeron sur une partie seulement de sa longueur.

Selon un mode de réalisation avantageux du procédé selon l'invention, la pièce intermédiaire formée à l'étape b) comporte en outre deux parties latérales de section sensiblement en forme d'angle droit, chaque partie latérale comprenant une partie plane qui s'étend à partir d'un bord externe d'un longeron vers l'extérieur de celui-ci dans le prolongement de la partie centrale plane de fermeture, et une partie relevée qui s'étend sensiblement perpendiculairement à ladite partie plane correspondante.

Ces parties latérales de section sensiblement en forme d'angle droit de la pièce de fermeture, permettent sa fixation à une partie structurelle du véhicule, en appui sur le berceau moteur.

Par ailleurs, selon une caractéristique avantageuse du procédé selon l'invention, la pièce intermédiaire formée à l'étape b) comporte en outre une partie arrière relevée qui s'étend à partir du bord longitudinal arrière de la partie centrale plane de fermeture.

Cette partie arrière relevée permet de fermer le moteur du côté arrière du véhicule.

Selon ce mode de réalisation précité, conformément à l'invention, la partie arrière relevée s'étend obliquement vers l'arrière par rapport à la partie centrale plane de fermeture.

Avantageusement, conformément au procédé selon l'invention, on utilise comme plaque de base, une plaque comportant deux couches supérieure et inférieure constituées pas un tissu de brins comprenant des fibres de verre noyées dans un matériau thermoplastique tel que du polypropylène, et une couche centrale prise en sandwich entre les couches supérieure et inférieure comprenant un matériau thermoplastique renforcé estampable.

Le matériau thermoplastique renforcé estampable de la couche centrale est renforcé avec des fibres de verre.

Préférentiellement, selon l'invention, les couches supérieure et inférieure de la plaque de base sont constituées par un tissu équilibré.

On entend par équilibré, un tissage dans lequel les brins sont croisés pour former entre eux un angle droit, et dans lequel il y a autant de brins dans une direction que dans l'autre.

On peut également envisager selon l'invention, des plaques de fermeture constituées par un matériau sandwich identique à celui de la plaque de base.

En outre, selon une caractéristique du procédé selon l'invention, il peut être prévu une étape supplémentaire entre l'étape a) et l'étape b), qui consiste à former un empilement en disposant des plaques de renfort composites en matière plastique renforcée, de surface S' inférieure à ladite surface S, préalablement chauffées, sur ladite plaque de base, de manière sensiblement parallèle, le long des bords latéraux de la plaque de base, à l'étape b) on estampe alors l'empilement pour former la pièce intermédiaire.

Les plaques de renfort utilisées comportent avantageusement des couches supérieure et inférieure constituées par un tissu de brins comprenant des fibres de verre noyées dans du matériau thermoplastique tel que du polypropylène et une couche centrale prise en sandwich entre les deux couches supérieure et inférieure comprenant un matériau thermoplastique renforcé estampable.

Préférentiellement, les couches supérieure et inférieure des plaques de renfort sont constituées par un tissu dans lequel les brins sont orientés à plus ou moins 45 degrés les uns par rapport aux autres.

Selon un autre mode de réalisation du procédé conforme à la présente invention, il est possible d'utiliser des plaques de renfort qui comportent une couche de tissu de brins comprenant des fibres de verre noyées dans un matériau thermoplastique tel que du polypropylène.

Ici aussi, les brins dudit tissu sont préférentiellement orientés à plus ou moins 45 degrés les uns par rapport aux autres.

En outre, préférentiellement, conformément à la présente invention, la température de chauffage est de l'ordre de 200 degrés et la pression d'estampage est de l'ordre de 250 bars.

La présente invention propose également une pièce de fermeture sous moteur pour véhicule automobile, selon la revendication 1 Avantageusement, la pièce comporte:
- une partie centrale plane de fermeture comprenant une couche supérieure et une couche inférieure constituées par un tissu équilibré de brins comprenant des fibres de verre noyées dans du polypropylène, ainsi qu'une couche centrale d'un matériau thermoplastique renforcé estampable prise en sandwich entre les deux couches supérieure et inférieure,
- deux longerons parallèles, positionnés sur les deux bords latéraux de la partie centrale plane, présentant une section ouverte en U, avec chacune de leurs extrémités fermées, lesdits longerons comprenant au moins une couche constituée par un matériau sandwich identique à celui de la partie centrale plane de fermeture,
- deux plaques de fermeture des ouvertures des longerons, solidaires de la partie centrale plane de fermeture.

De préférence, les longerons viennent de formation avec la partie centrale plane de fermeture.

Avantageusement, selon l'invention, les longerons comprennent une couche supplémentaire supérieure constituée par un matériau sandwich comprenant deux couches supérieure et inférieure constituées par un tissu de brins orientés à plus ou moins 45 degrés les uns par rapport aux autres et comprenant des fibres de verre noyées dans du polypropylène, et une couche centrale d'un matériau thermoplastique renforcé estampable.

Selon une variante de réalisation de la pièce de fermeture selon l'invention, la couche supplémentaire supérieure des longerons est un tissu de brins orientés à plus ou moins 45 degrés les uns par rapport aux autres, les brins comprenant des fibres de verre noyées dans du polypropylène.

En outre, selon l'invention, la pièce de fermeture comporte des parties latérales de section sensiblement en forme d'angle droit, venant de formation avec la partie centrale plane, chaque partie latérale, constituée par un matériau thermoplastique renforcé estampable, comprenant une partie plane qui s'étend à partir d'un bord externe d'un longeron vers l'extérieur de celui-ci dans le prolongement de la partie centrale plane de fermeture et une partie relevée qui s'étend sensiblement perpendiculairement à ladite partie plane correspondante.

La pièce de fermeture selon l'invention peut comporter avantageusement une partie arrière relevée constituée par un matériau thermoplastique renforcé estampable, venant de formation avec la partie centrale plane de fermeture, et s'étendant à partir d'un bord longitudinal arrière de cette dernière selon une direction oblique.

Les plaques de fermeture comprennent chacune deux couches supérieure et inférieure constituées par un tissu équilibré de brins comportant des fibres de verre noyées dans du polypropylène, ainsi qu'une couche centrale d'un matériau thermoplastique renforcé estampable.

Selon des variantes de l'invention, on peut également envisager d'utiliser des plaques de fermeture réalisées en matière thermoplastique reforcée estampable ou encore en polypropylène injecté.

Bien entendu, de manière préférentielle, la pièce de fermeture selon l'invention est fabriquée conformément au procédé selon l'invention.

La description qui va suivre en regard des dessins annexés, donnés à titre d'exemples non limitatifs fera bien comprendre en quoi consiste l'invention et comment elle peut être réalisée.

Sur les dessins annexés :
- la figure 1 est une représentation schématique d'une étape d'un mode de réalisation du procédé de fabrication selon la présente invention,
- la figure 2 est une représentation schématique d'une dernière étape d'un mode de réalisation du procédé selon la présente invention, sur laquelle on distingue la pièce intermédiaire obtenue par estampage conformément à l'invention,
- la figure 3 est une vue en coupe selon le plan A-A de la pièce intermédiaire représentée sur la figure 2.

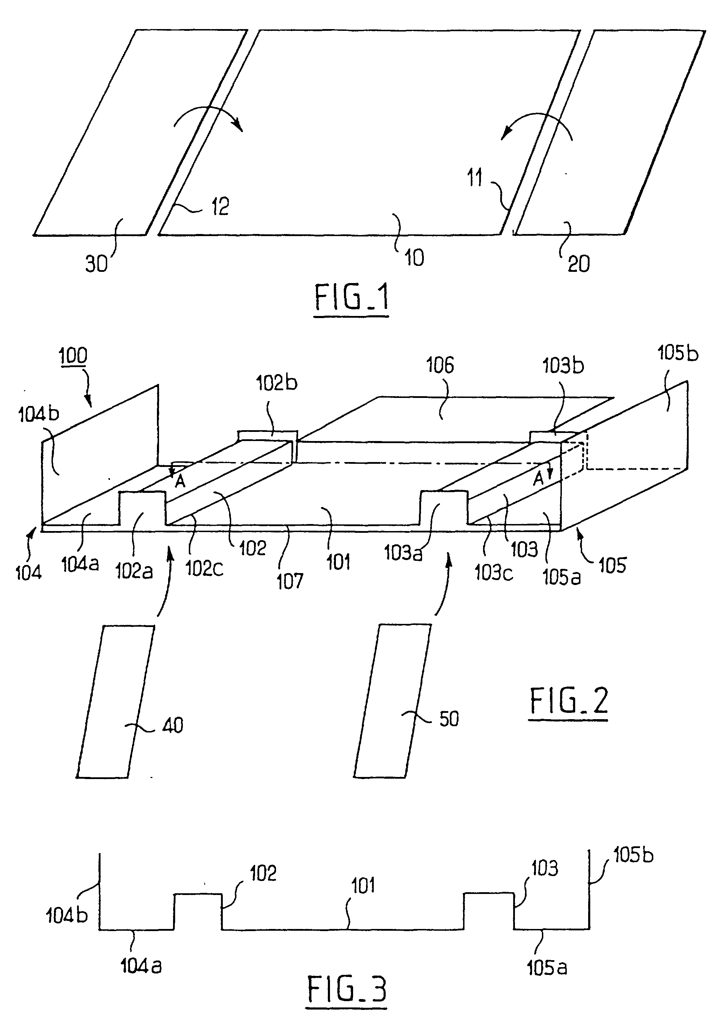

Sur les figures 1 et 2, on a représenté deux étapes d'un mode de réalisation particulier du procédé de fabrication, conforme à la présente invention, d'une pièce de fermeture sous moteur 100 pour véhicule automobile.

Ce procédé de fabrication comporte une première étape selon laquelle on chauffe au moins une plaque de base 10 de surface S et au moins deux plaques de renfort 20, 30 de surface S' inférieure à la surface S, lesdites plaques de base et de renfort étant des plaques composites en matière plastique renforcée.

Plus particulièrement, la surface S' des plaques de renfort correspond à la surface developpée dans le plan des longerons formés par estampage dans une étape suivante du procédé, comme cela sera décrit ultérieurement.

Ici, avantageusement, la plaque de base utilisée comporte deux couches supérieure et inférieure constituées par un tissu de brins comprenant des fibres de verre noyées dans un matériau thermoplastique tel que du polypropylène et une couche centrale prise en sandwich entre les deux couches supérieure et inférieure comprenant un matériau thermoplastique renforcé estampable.

Le tissu de brins est un tissu équilibré, c'est-à-dire un tissu dans lequel les brins sont orientés les uns par rapport aux autres selon deux directions perpendiculaires, autant de brins étant disposés dans les deux directions.

Préférentiellement, la plaque de base présente une épaisseur comprise environ entre 3 et 4 mm avec des couches supérieure et inférieure constituées par le tissu de brins équilibré, formant les faces supérieure et inférieure de la plaque de base, dont l'épaisseur est comprise entre 1 et 2 mm.

Le poids de cette plaque de base est alors de l'ordre de 1900 g pour une épaisseur de l'ordre de 3,7 mm.

Les plaques de renfort présentent une épaisseur d'environ 2 mm.

Plus particulièrement, elles comprennent deux couches supérieure et inférieure, formant les faces inférieure et supérieure des plaques de renfort, constituées par un tissu de brins comprenant des fibres de verre noyées dans du polypropylène, orientés à plus ou moins 45 degrés les uns par rapport aux autres, et une couche centrale d'un matériau thermoplastique renforcé estampable.

Le poids de chacune des plaques de renfort est de l'ordre de 450 g.

Selon une variante, on peut aussi utiliser des plaques de renfort constituées par un tissu de brins comportant des fibres de verre noyées dans du polypropylène, orientés à plus ou moins 45 degrés les uns par rapport aux autres.

Conformément à l'invention, on chauffe simultanément la plaque de base et les deux plaques de renfort dans un four à environ 200 degrés.

Comme le montre plus particulièrement la figure 1, les plaques de base et de renfort ainsi chauffées sont empilées, en disposant lesdites plaques de renfort 20, 30 sur ladite plaque de base 10, de manière sensiblement parallèle le long des deux bords latéraux 11, 12 de la plaque de base 10.

Par la suite, on estampe l'empilement pour former une pièce intermédiaire, plus particulièrement représentée sur la figure 2, qui comprend une partie centrale plane de fermeture 101 bordée latéralement par deux longerons 102, 103.

Bien entendu, selon des variantes non représentées du procédé selon l'invention, on peut envisager d'utiliser seulement une seule plaque de base en matériau sandwich composite que l'on chauffe et presse pour former la pièce intermédiaire représentée sur la figure 2, cette plaque de base pouvant éventuellement comporter une surépaisseur de renfort le long de ses bords latéraux.

Comme le montre en particulier la figure 3, les longerons 102, 103 de la pièce intermédiaire, présentent une section ouverte en forme de U. Lors de l'estampage réalisé sous une pression de l'ordre de 250 bars dans une presse de compression de 2200 tonnes environ, le matériau thermoplastique renforcé estampable compris dans la plaque de base et les plaques de renfort (si elles existent), flue pour venir notamment fermer chacune des extrémités 102a, 102b, 103a, 103b des longerons 102, 103.

En outre, lors de l'estampage, le matériau thermoplastique renforcé estampable vient remplir des parties du moule de formage, pour former une pièce intermédiaire (représentée sur la figure 2) qui comporte deux parties latérales 104, 105 de section sensiblement en forme d'angle droit (voir la figure 3), chaque partie latérale 104, 105 comprenant une partie plane 104a, 105a qui s'étend à partir d'un bord externe d'un longeron 102, 103 vers l'extérieur de celui-ci dans le prolongement de la partie centrale plane de fermeture 101 et une partie relevée 104a, 105a qui s'étend sensiblement perpendiculairement à ladite partie plane correspondante 104a, 105a.

Les parties relevées 104b, 105b des parties latérales sont des parties de fixation de la pièce de fermeture sous moteur, en appui sur le berceau du moteur.

De plus, lors de l'étape d'estampage, on forme sur la pièce intermédiaire une partie arrière 106, constituée par le matériau thermoplastique renforcé estampable des plaques de base et de renfort, cette partie arrière 106 étant relevée et s'étendant obliquement à partir du bord longitudinal arrière de la partie centrale de fermeture 101. Cette partie arrière permet de fermer vers l'arrière l'accès au moteur.

Selon une étape suivante du procédé de fabrication selon la présente invention, on ferme alors l'ouverture des deux longerons 102, 103 en solidarisant à la pièce intermédiaire, des plaques de fermeture 40, 50 positionnées respectivement sur lesdites ouvertures, comme cela est plus particulièrement représenté sur la figure 2.

Les plaques de fermeture 40, 50 présentent sensiblement une surface égale à la surface de l'ouverture des longerons 102, 103.

Elles peuvent comprendre également deux couches supérieure et inférieure constituant les faces inférieure et supérieure desdites plaques, constituées par un tissu de brins comprenant des fibres de verre noyées dans du matériau thermoplastique tel que du polypropylène, brins orientés à 90 degrés les uns par rapport aux autres, et une couche centrale prise en sandwich entre les deux couches supérieure et inférieure, comprenant un matériau thermoplastique renforcé en fibres de verre estampable.

Bien entendu, on pourrait envisager d'utiliser comme plaques de fermeture, des plaques réalisées simplement en polypropylène injecté ou encore en matière thermoplastique renforcée estampable.

La solidarisation des plaques de fermeture 40, 50 avec la pièce intermédiaire pour la réalisation de la pièce de fermeture, peut être effectuée selon différentes techniques.

Parmi ces techniques, on peut envisager un assemblage à l'aide d'un soudage par ultrason, d'un soudage par induction, par collage, par rivetage associé ou non à un thermosoudage.

Une solution préférentielle est l'assemblage par soudage par vibration ou par soudage par miroir associé ou non à un rivetage ou un agrafage.

Pour la mise en oeuvre du soudage par vibration ou du soudage par miroir, on utilise un ou plusieurs cordons de soudure riches en polypropylène de largeur environ de 2 mm qui fondent rapidement pour débuter l'opération de soudure.

Ces cordons de soudure peuvent être moulés directement avec la pièce intermédiaire lors de l'étape d'estampage. Le ou les cordons sont positionnés au niveau des bords inférieurs 102c, 103c des longerons 102, 103.

Avantageusement, on peut envisager de réaliser lors de l'estampage des bords inférieurs des longerons en forme de crénaux longs desquels court au moins un cordon de soudure.

La soudure en forme de crénaux permettrait d'éviter en cas de choc, la propagation de ce choc le long de la soudure et le décollement du longeron de la plaque de fermeture.

Selon l'invention, on réalise, lors du moulage de la pièce intermédiaire, un orifice dans l'extrémité arrière 102b, 103b des longerons 102, 103, permettant la fixation de la pièce de fermeture en appui sur le berceau moteur. En outre, lors d'une étape de poinçonnage intervenant après le moulage de la pièce, on effectue des orifices de fixation dans le rebord avant 107 de la pièce intermédiaire pour sa fixation sur l'extrémité du pare-chocs du véhicule automobile.

Après cette étape de poinçonnage, on peut prévoir une étape d'ébavurage pour la finition de la pièce intermédiaire avant que les plaques de fermeture soient solidarisées à celle-ci.

Ainsi, selon l'invention, on forme une pièce de fermeture sous moteur pour véhicules automobiles, qui présente avantageusement un poids relativement faible inférieur à 3 kg.

Cette pièce de fermeture permet de fermer inférieurement le berceau moteur dans lequel est suspendu le moteur du véhicule et d'absorber en cas de choc frontal, en biais ou latéral du véhicule, une partie de l'énergie cinétique de ce choc.

Une telle pièce donne des résultats tout à fait satisfaisant au test de choc en biais sur un demi-mur à 56 km/h, test normalisé dans l'industrie automobile.

Plus particulièrement, selon l'invention, la pièce de fermeture sous moteur 100 pour véhicules automobiles comporte :
- une partie centrale plane de fermeture 101 comprenant une couche supérieure et une couche inférieure constituées par un tissu équilibré de brins comprenant des fibres de verre noyées dans du polypropylène, ainsi qu'une couche centrale d'un matériau thermoplastique estampable renforcé en fibres de verre pris en sandwich entre les deux couches supérieure et inférieure,
- deux longerons 102, 103 absorbeurs de choc, parallèles positionnés sur les deux bords latéraux de la partie centrale plane 101, ces deux longerons présentant une section ouverte en U, avec chacune de leurs extrémités fermées, lesdits longerons comprenant une couche constituée par un matériau sandwich identique à celui de la partie centrale plane.

De plus, la pièce de fermeture sous moteur comporte deux plaques de fermeture 40, 50 des ouvertures des deux longerons 102, 103 solidaires de la partie centrale plane 101 et avantageusement constituées par un matériau sandwich composite du type de celui de la plaque de base.

On peut prévoir que les longerons 102, 103 viennent de formation avec la partie centrale plane, conformément au procédé selon l'invention décrit précédemment.

Bien entendu, selon une variante non représentée, les longerons peuvent être fabriqués séparement de la partie centrale plane de fermeture, puis assemblés à celle-ci par exemple selon une technique de rivetage et thermosoudage.

Préférentiellement, les longerons comprennent une couche supérieure supplémentaire qui comprend deux couches supérieure et inférieure constituées par un tissu de brins orientés à plus ou moins 45 degrés, les uns par rapport aux autres et comportant des fibres de verre noyées dans du polypropylène et une couche centrale d'un matériau thermoplastique estampable renforcé en fibres de verre.

Comme le montre plus particulièrement la figure 2, cette pièce de fermeture comme nous l'avons déjà mentionnée, comporte des parties latérales 104, 105 de section sensiblement en forme d'angle droit, venant de formation avec la partie centrale plane 101, chaque partie latérale constituée par le matériau thermoplastique estampable renforcé en fibres de verre notamment de la plaque de base, comprenant une partie plane qui s'étend à partir du bord externe de chaque longeron 102, 103 vers l'extérieur de celui-ci dans le prolongement de la partie centrale plane de fermeture 101 et une partie relevée 104b, 105b qui s'étend sensiblement perpendiculairement à la partie plane correspondante 104a, 105a, partie relevée qui sert à la fixation de la pièce de fermeture sur la structure interne du véhicule.

Cette pièce de fermeture comporte en outre une partie arrière relevée 106 constituée par le matériau thermoplastique estampable renforcé en fibres de verre présent notamment dans la plaque de base, venant de formation avec la partie centrale plane de fermeture 101 et s'étendant à partir du bord arrière longitudinal de cette dernière selon une direction oblique par rapport à la partie centrale plane de fermeture 101.

Elle permet de protéger la partie arrière du moteur.

La présente invention n'est nullement limitée au mode de réalisation décrit et représenté, mais l'homme du métier saura y apporter toute variante conforme à son esprit.

## Revendications

1. Pièce de fermeture sous moteur (100) pour véhicule automobile comportant une partie centrale plane de fermeture (101) et deux longerons (102, 103) bordant latéralement la partie centrale et fermés à chacune de leurs extrémités (102a, 102b, 103a, 103b), **caractérisé en ce que** la partie centrale et les longerons sont constitués par au moins une couche en matière plastique renforcée, les longerons (102, 103) ayant une section ouverte en forme de U, la pièce comportant deux plaques de fermeture (40, 50) des ouvertures des longerons solidaires de la partie centrale (101).

2. Pièce de fermeture selon la revendication 1, **caractérisée en ce que** la partie centrale et les longerons comprennent deux couches supérieure et inférieure constituées par un tissus de brins comprenant des fibres de verre noyées dans un matériau thermoplastique tel que du polypopylène, et une couche centrale prise en sandwich entre les deux couches et comprenant un matériau thermoplastique renforcé estampable.

3. Pièce de fermeture selon la revendication 3, **caractérisée en ce que** le tissus de brins est équilibré.

4. Pièce de fermeture selon l'un des revendications 2 ou 3, **caractérisée en ce que**, les couches supérieure, centrale et inférieure formant un matériau sandwich, le matériau sandwich des longerons est identique au matériau sandwich de la partie centrale.

5. Pièce de fermeture selon l'une des revendications 1 à 4, **caractérisée en ce que** les longerons (102, 103) viennent de formation avec la partie centrale plane de fermeture (101).

6. Pièce de fermeture selon l'une des revendications 1 à 5, **caractérisée en ce qu'**elle comporte des parties latérales (104, 105) de section sensiblement en forme d'angle droit, venant de formation avec la partie centrale plane (101), chaque partie latérale (104, 105) constituée par un matériau thermoplastique renforcé estampable, comprenant une partie plane (104a, 105a) qui s'étend à partir d'un bord externe d'un longeron (102, 103) vers l'extérieur de celui-ci dans le prolongement de la partie centrale plane de fermeture (101) et une partie relevée (104b, 105b) qui s'étend sensiblement perpendiculairement à ladite partie plane correspondante (104a, 105a).

7. Pièce de fermeture selon l'une des revendications 1 à 6, **caractérisée en ce qu'**elle comporte une partie arrière (106) relevée, constituée par un matériau thermoplastique renforcé estampable, venant de formation avec la partie centrale plane de fermeture (101) et qui s'étend à partir d'un bord longitudinal arrière de cette dernière selon une direction oblique.

8. Pièce de fermeture selon l'une des revendications 1 à 7, **caractérisée en ce que** les plaques de fermeture (40, 50) comprennent chacune deux couches supérieure et inférieure constituées par un tissu équilibré de brins comportant des fibres de verre noyées dans du polypropylène, ainsi qu'une couche centrale d'un matériau thermoplastique renforcé estampable.

9. Pièce de fermeture selon l'une des revendications 1 à 8, **caractérisée en ce que** les longerons (102, 103) comportent une couche supplémentaire supérieure constituée par un matériau sandwich comprenant deux couches supérieure et inférieure constituées par un tissu de brins orientés à plus ou moins 45 degrés les uns par rapport aux autres et comportant des fibres de verre noyées dans du polypropylène et une couche centrale d'un matériau thermoplastique renforcé estampable.

10. Pièce de fermeture selon l'une des revendications 1 à 9, **caractérisée en ce que** les longerons (102, 103) comporte une couche supplémentaire supérieure constituée par un tissu de brins orientés à plus ou moins 45 degrés les uns par rapport aux autres, les brins comprenant des fibres de verre noyées dans du polypropylène.

11. Procédé de fabrication d'une pièce de fermeture sous moteur (100) selon la revendication 1, **caractérisé en ce qu'**il comprend les étapes consistant à :
a) - chauffer au moins une plaque de base (10) de surface S, en matière plastique renforcée,
b) - estamper ladite plaque de base (10) pour former une pièce intermédiaire comprenant une partie centrale plane de fermeture (101) bordée latéralement par deux longerons (102, 103) de section ouverte en forme de U, fermés à chacune de leurs extrémités,
c) - fermer l'ouverture des deux longerons (102, 103) en solidarisant à la pièce intermédiaire, deux plaques de fermeture (40, 50), positionnées respectivement sur lesdites ouvertures.

12. Procédé selon la revendication 11, **caractérisé en ce que** la pièce intermédiaire formée à l'étape b) comporte en outre deux parties latérales (104, 105) de section sensiblement en forme d'angle droit, chaque partie latérale (104, 105) comprenant une partie plane (104a, 105a) qui s'étend à partir d'un bord externe d'un longeron (102, 103) vers l'extérieur de celui-ci dans le prolongement de la partie centrale plane de fermeture (101), et une partie relevée (104b, 105b) qui s'étend sensiblement perpendiculairement à ladite partie plane correspondante (104a, 105a).

13. Procédé selon l'une des revendications 11 ou 12, **caractérisé en ce que** la pièce intermédiaire formée à l'étape b) comporte en outre une partie arrière (106) relevée qui s'étend à partir du bord longitudinal arrière de la partie centrale plane de fermeture (101).

14. Procédé selon la revendication 13, **caractérisé en ce que** la partie arrière relevée (106) s'étend obliquement vers l'arrière par rapport à la partie centrale plane de fermeture (101).

15. Procédé selon l'une des revendications 11 à 14, **caractérisé en ce qu'**on utilise une plaque de base (10) comportant deux couches supérieure et inférieure constituées par un tissu de brins comprenant des fibres de verre noyées dans du matériau thermoplastique tel que du polypropylène et une couche centrale prise en sandwich entre les deux couches supérieure et inférieure comprenant un matériau thermoplastique renforcé estampable.

16. Procédé selon la revendication 15, **caractérisé en ce que** les couches supérieure et inférieure de la plaque de base (10) sont constituées par un tissu équilibré.

17. Procédé selon l'une des revendications 15 ou 16, **caractérisé en ce que** les plaques de fermeture (40, 50) sont constituées par un matériau sandwich identique à celui de la plaque de base (10).

18. Procédé selon l'une des revendications 11 à 17, **caractérisé en ce qu'**il comporte une étape supplémentaire entre l'étape a) et l'étape b), qui consiste à former un empilement en disposant des plaques de renfort (20, 30) composites en matière plastique, préalablement chauffées, sur ladite plaque de base (10), de manière sensiblement parallèle, le long des bords latéraux (11, 12) de la plaque de base (10), et **en ce qu'**à l'étape b) on estampe l'empilement pour former la pièce intermédiaire.

19. Procédé selon la revendication 18, **caractérisé en ce que** les plaques de renfort (20, 30) utilisées comportent deux couches supérieure et inférieure constituées par un tissu de brins comprenant des fibres de verre noyées dans du matériau thermoplastique tel que du polypropylène et une couche centrale prise en sandwich entre les deux couches supérieure et inférieure comprenant un matériau thermoplastique renforcé estampable.

20. Procédé selon la revendication 19, **caractérisé en ce que** les couches supérieure et inférieure des plaques de renfort (20, 30) sont constituées par un tissu dans lequel les brins sont orientés à plus ou moins 45 degrés les uns par rapport aux autres.

21. Procédé selon la revendication 18, **caractérisé en ce que** les plaques de renfort utilisées comportent une couche d'un tissu de brins comprenant des fibres de verre noyées dans du matériau thermoplastique tel que du polypropylène.

22. Procédé selon la revendication 21, **caractérisé en ce que** les brins dudit tissu sont orientés à plus ou moins 45 degrés les uns par rapport aux autres.

23. Procédé selon l'une des revendications 11 à 22, **caractérisé en ce que** la température de chauffage est de l'ordre de 200 °C.

24. Procédé selon l'une des revendication 11 à 23, **caractérisé en ce qu'**à l'étape b) la pression d'estampage est de l'ordre de 250 bars.

## Claims

1. An under-engine closure piece (100) for a motor vehicle, the piece comprising a plane central closure portion (101) and two longitudinally-extending rail members (102, 103) on either side of the central portion that are closed at each of their ends (102a, 102b, 103a, 103b), the closure piece being **characterized in that** said central portion and the rail members are constituted by at least one layer of reinforced plastics material, the rail members (102, 103) being of open channel section, the closure piece including two closure plates (40, 50) for closing the openings of the rail members, said plates being secured to the central portion (101).

2. A closure piece according to claim 1, **characterized in that** the central portion and the rail members comprise top and bottom layers constituted by fabric made of strands comprising glass fibers embedded in a thermoplastic material such as polypropylene, together with a central layer sandwiched between said two layers and comprising a stampable reinforced thermoplastic material.

3. A closure piece according to claim 2, **characterized in that** the stranded fabric is balanced.

4. A closure piece according to claim 2 or claim 3, **characterized in that** with the top, central, and bottom layers forming a sandwich material, the sandwich material of the rail members is identical to the sandwich material of the central portion.

5. A closure piece according to any one of claims 1 to 4, **characterized in that** the rail members (102, 103) are integrally formed with the plane central closure portion (101).

6. A closure piece according to any one of claims 1 to 5, **characterized in that** it includes side portions (104, 105) of substantially right-angle shaped section integrally formed with the plane central portion (101), each side portion (104, 105) constituted by a stampable reinforced thermoplastic material comprising a plane portion (104a, 105a) which extends outwards from an outer edge of a rail member (102, 103) in line with the plane central closure portion (101) and a raised portion (104b, 105b) extending substantially perpendicularly to said corresponding plane portion (104a, 105a).

7. A closure piece according to any one of claims 1 to 6, **characterized in that** it includes a raised rear portion (106) constituted by a stampable reinforced thermoplastic material integrally formed with the plane central closure portion (101) and extending from a transverse rear edge thereof in a sloping direction.

8. A closure piece according to any one of claims 1 to 7, **characterized in that** each of the closure plates (40, 50) comprises a top layer and a bottom layer constituted by a balanced fabric of strands comprising glass fibers embedded in polypropylene, together with a central layer of a stampable reinforced thermoplastic material.

9. A closure piece according to any one of claims 1 to 8, **characterized in that** the rail members (102, 103) comprise an additional top layer constituted by a sandwich material comprising top and bottom layers constituted by a fabric of strands oriented at ±45° relative to one another and comprising glass fibers embedded in polypropylene, together with a central layer of a stampable reinforced thermoplastic material.

10. A closure piece according to any one of claims 1 to 9, **characterized in that** the rail members (102, 103) comprise an additional top layer constituted by a fabric of strands oriented at ±45° to one another, the strands comprising glass fibers embedded in polypropylene.

11. A method of manufacturing an under-engine closure piece (100) in accordance with claim 1, the method being **characterized in that** it comprises the steps consisting in:
a) heating at least one base plate (10) of area S that is made of reinforced plastics material;
b) stamping said base plate (10) to form an intermediate piece comprising a plane central closure portion (101) with two longitudinally-extending rail members (102, 103) on either side that are of open channel section and that are closed at each of their ends; and
c) closing the openings of the two rail members (102, 103) by securing two closure plates (40, 50) to the intermediate piece, which closure plates are positioned over respective ones of said openings.

12. A method according to claim 11, **characterized in that** the intermediate piece formed in step b) further comprises two side portions (104, 105) of substantially right-angled section, each side portion (104, 105) comprising a plane portion (104a, 105a) which extends outwards from an outer edge of a rail member (102, 103) in line with the plane central closure portion (101), and a raised portion (104b, 105b) that extends substantially perpendicularly from the corresponding plane portion (104a, 105a).

13. A method according to claim 11 or claim 12, **characterized in that** the intermediate piece formed in step b) further comprises a rear raised portion (106) extending from a rear transverse edge of the plane central closure portion (101).

14. A method according to claim 13, **characterized in that** the raised rear portion (106) slopes rearwards from the plane central closure portion (101).

15. A method according to any one of claims 11 to 14, **characterized in that** a base plate (10) is used comprising top and bottom layers constituted by a stranded fabric comprising glass fibers embedded in a thermoplastic material such as polypropylene together with a central layer sandwiched between the top and bottom layers and comprising a stampable reinforced thermoplastic material.

16. A method according to claim 15, **characterized in that** the top and bottom layers of the base plate (10) are constituted by a balanced fabric.

17. A method according to claim 15 or claim 16, **characterized in that** the closure plates (40, 50) are constituted by a sandwiched material identical to that of the base plate (10).

18. A method according to any one of claims 11 to 17, **characterized in that** it includes an additional step between step a) and step b), which step consists in forming a stack by placing previously heated composite reinforcing plates (20, 30) of plastics material on said base plate (10) in substantially parallel manner along the side edges (11, 12) of the base plate (10), and **in that** during step b) the stack is stamped to form the intermediate piece.

19. A method according to claim 18, **characterized in that** the reinforcing plates (20, 30) used comprise a top layer and a bottom layer made of a stranded fabric comprising glass fibers embedded in a thermoplastic material such as polypropylene together with a central layer sandwiched between the top and bottom layers and comprising a stampable reinforced thermoplastic material.

20. A method according to claim 19, **characterized in that** the top and bottom layers of the reinforcing plates (20, 30) are constituted by a fabric in which the strands are oriented at ±45° to one another.

21. A method according to claim 18, **characterized in that** the reinforcing plates used comprise a layer of stranded fabric comprising glass fibers embedded in a thermoplastic material such as polypropylene.

22. A method according to claim 21, **characterized in that** the strands of said fabric are oriented at ±45° relative to one another.

23. A method according to any one of claims 11 to 22, **characterized in that** the heating temperature is about 200°C.

24. A method according to any one of claims 11 to 23, **characterized in that** the stamping pressure during step b) is about 250 bars.

## Patentansprüche

1. Unter dem Motor (100) anzubringendes Verschlußstück für ein Kraftfahrzeug, mit einem mittleren, ebenen Verschlußteil (101) und zwei Holmen (102, 103), die seitlich an den mittleren Teil angrenzen und an jedem ihrer Enden (102a, 102b, 103a, 103b) verschlossen sind, **dadurch gekennzeichnet, daß** der mittlere Teil und die Holme von mindestens einer Schicht aus verstärktem Kunststoff gebildet sind, wobei die Holme (102, 103) einen offenen, U-förmigem Querschnitt haben, und das Stück zwei Verschlußplatten (40, 50) für die Öffnungen der Holme aufweist, die fest mit dem mittleren Teil (101) verbunden sind.

2. Verschlußstück nach Anspruch 1, **dadurch gekennzeichnet, daß** das mittlere Teil und die Holme zwei Schichten aufweisen, und zwar eine obere und eine untere, die von einem Gewebe bzw. Stoff aus Fäden gebildet sind, die Glasfasern umfassen, die in ein thermoplastisches Material wie Polypropylen eingebettet sind, und eine mittlere Schicht, die sandwichartig zwischen die beiden Schichten eingeschlossen ist und ein verstärktes, prägefähiges, thermoplastisches Material aufweist.

3. Verschlußstück nach Anspruch 3, **dadurch gekennzeichnet, daß** das Gewebe aus Fäden ausgeglichen ist.

4. Verschlußstück nach einem der Ansprüche 2 oder 3, **dadurch gekennzeichnet, daß** die obere, mittlere und untere Lage ein Sandwichmaterial bilden, wobei das Sandwichmaterial der Holme identisch ist mit dem Sandwichmaterial des mittleren Teils.

5. Verschlußstück nach einem der Ansprüche 1 bis 4, **dadurch gekennzeichnet, daß** die Holme (102, 103) der Formgebung zusammen mit dem mittleren, ebenen Verschlußteil (101) entstammen.

6. Verschlußstück nach einem der Ansprüche 1 bis 5, **dadurch gekennzeichnet, daß** es Seitenteile (104, 105) mit einem Querschnitt im wesentlichen in Form eines rechten Winkels aufweist, die der Formgebung zusammen mit dem ebenen, mittleren Teil (101) entstammen, und daß jedes Seitenteil (104, 105), das aus einem thermoplastischen, verstärkten, prägefähigen Material gebildet ist, einen ebenen Teil (104a, 105a), der sich von einem Außenrand eines Holmes (102, 103) her zur Außenseite dessen in der Verlängerung des ebenen, mittleren Verschlußteils (101) erstreckt, und einen abstehenden Teil (104b, 105b) aufweist, der sich im wesentlichen senkrecht zum genannten, entsprechenden. ebenen Teil (104a, 105a) erstreckt.

7. Verschlußstück nach einem der Ansprüche 1 bis 6, **dadurch gekennzeichnet, daß** es einen hinteren, abstehenden Teil (106) aufweist, der aus einem thermoplastischen, verstärkten, prägefähigen Material gebildet ist, der Formgebung zusammen mit dem mittleren, ebenen Verschlußteil (101) entstammt, und sich von einem hinteren Längsrand dessen in einer schrägen Richtung erstreckt.

8. Verschlußstück nach einem der Ansprüche 1 bis 7, **dadurch gekennzeichnet, daß** die Verschlußplatten (40, 50) jeweils zwei Schichten, nämlich eine obere und eine untere, aufweisen, die von einem ausgeglichenen Gewebe bzw. Stoff aus Fäden gebildet sind, die Glasfasern umfassen, die in Polypropylen eingebettet sind, sowie eine mittlere Schicht aus einem thermoplastischen, verstärkten, prägefähigen Material.

9. Verschlußstück nach einem der Ansprüche 1 bis 8, **dadurch gekennzeichnet, daß** die Holme (102, 103) eine zusätzliche, obere Schicht aufweisen, die von einem Sandwichmaterial gebildet ist, das zwei Schichten, eine obere und untere, die aus einem Gewebe bzw. Stoff aus Fäden gebildet ist, die unter mehr oder weniger unter 45° zueinander ausgerichtet sind, und Glasfasern aufweisen, die in Polypropylen eingelassen sind, sowie eine mittlere Schicht aus einem verstärkten, prägefähigen thermoplastischen Material aufweist.

10. Verschlußstück nach einem der Ansprüche 1 bis 9. **dadurch gekennzeichnet, daß** die Holme (102, 103) eine zusätzliche, obere Schicht aufweisen, die von einem Gewebe bzw. Stoff gebildet ist, mit Fäden, die mehr oder weniger unter 45° zueinander ausgerichtet sind, wobei die Fäden Glasfasern aufweisen, die in Polypropylen eingelassen sind.

11. Verfahren zur Herstellung eines unter dem Motor (100) anzubringenden Verschlußstücks nach Anspruch 1, **dadurch gekennzeichnet, daß** es die Schritte aufweist, die aus den folgenden bestehen:
a) - mindestens eine Grundplatte (10) mit der Oberfläche S aus verstärktem Kunststoff erwärmen,
b) - Prägen der genannten Grundplatte (10). um ein Zwischenstück zu bilden, das einen ebenen, mittleren Verschlußteil (101) aufweist, an das seitlich zwei Holme (102, 103) mit offenem, U-förmigem Querschnitt angrenzen, die jeder an seinen Enden verschlossen sind, und
c) - Verschließen der Öffnung der beiden Holme (102, 103), indem man mit dem Zwischenstück zwei Verschlußplatten (40, 50) fest verbindet, die jeweils über den genannten Öffnungen angeordnet sind.

12. Verfahren nach Anspruch 11, **dadurch gekennzeichnet, daß** das Zwischenstück, das im Schritt b) gebildet wurde, außerdem zwei Seitenteile (104, 105) mit im wesentlichen rechtwinkelförmigem Querschnitt aufweist, wobei jedes Seitenteil (104, 105) einen ebenen Teil (104a, 105a). der sich vom Außenrand eines Holmes (102, 103) aus zu dessen Außenseite hin in der Verlängerung der mittleren, ebenen Verschlußteils (101) erstreckt, und einen abstehenden Teil (104b, 105b) aufweist, der sich im wesentlichen senkrecht zum entsprechenden, ebenen Teil (104a, 105a) erstreckt.

13. Verfahren nach einem der Ansprüche 11 oder 12, **dadurch gekennzeichnet, daß** das Zwischenstück, das im Schritt b) gebildet wird. außerdem einen erhöhten hinteren Teil (106) aufweist, der sich von einem hinteren Längsrand des ebenen, mittleren Verschlußteils (101) aus erstreckt.

14. Verfahren nach Anspruch 13, **dadurch gekennzeichnet, daß** der erhöhte, hintere Teil (106) sich in Bezug auf den ebenen. mittleren Verschlußteil (101) schräg nach hinten erstreckt.

15. Verfahren nach einem der Ansprüche 11 bis 14, **dadurch gekennzeichnet, daß** man eine Grundplatte (10) verwendet, die zwei Lagen, eine obere und eine untere, die von einem Gewebe bzw. Stoff aus Fäden gebildet sind, die Glasfasern aufweisen, die in thermoplastisches Material eingebettet sind, wie etwa Polypropylen, und eine mittlere Lage aufweist, die sandwichartig zwischen den beiden Lagen, der oberen und der unteren, eingeschlossen ist und ein verstärktes, prägefähiges, thermoplastisches Material umfaßt.

16. Verfahren nach Anspruch 15, **dadurch gekennzeichnet, daß** die obere und untere Lage der Grundplatte (10) von einem ausgeglichenen Gewebe gebildet sind.

17. Verfahren nach einem der Ansprüche 15 oder 16, **dadurch gekennzeichnet, daß** die Verschlußplatten (40, 50) von einem Sandwichmaterial gebildet sind, das identisch zu dem der Grundplatte (10) ist.

18. Verfahren nach einem der Ansprüche 11 bis 17, **dadurch gekennzeichnet, daß** es einen zusätzlichen Schritt zwischen dem Schritt a) und dem Schritt b) aufweist, der darin besteht, einen Stapel zu bilden, indem man Verbund-Verstärkungsplatten (20, 30) aus Kunststoff, die vorher erwärmt wurden, auf der genannten Grundplatte (10) in im wesentlichen paralleler Weise längs der seitlichen Ränder (11, 12) der Grundplatte (10) anordnet, und daß man im Schritt b) den Stapel prägt, um das Zwischenstück zu bilden.

19. Verfahren nach einem der Anspruch 18, **dadurch gekennzeichnet, daß** die Verstärkungsplatten (20, 30) zwei Schichten, eine obere und eine untere, die von einem Gewebe bzw. Stoff aus Fäden gebildet sind, die Glasfasern aufweisen, die im thermoplastischen Material wie Polypropylen eingelassen sind, und eine mittlere Schicht aufweisen, die sandwichartig zwischen den beiden Schichten, der oberen und der unteren, aufgenommen ist und ein thermoplastisches, verstärktes, prägefähiges Material aufweist.

20. Verfahren nach Anspruch 19, **dadurch gekennzeichnet, daß** die obere und untere Schicht der Verstärkungsplatten (20, 30) von einem Gewebe bzw. Stoff gebildet sind, in dem die Fäden zueinander mehr oder weniger unter 45 Grad orientiert sind.

21. Verfahren nach Anspruch 18, **dadurch gekennzeichnet, daß** die verwendeten Verstärkungsplatten eine Schicht aus einem Gewebe bzw. Stoff aus Fäden aufweisen, die Glasfasern aufweisen, die in das thermoplastische Material wie Polypropylen eingelassen sind.

22. Verfahren nach Anspruch 21, **dadurch gekennzeichnet, daß** die Fäden des genannten Gewebes mehr oder weniger unter 45 Grad zueinander orientiert sind.

23. Verfahren nach einem der Ansprüche 11 bis 22, **dadurch gekennzeichnet. daß** die Temperatur der Erwärmung in der Größenordnung von 200 °C liegt.

24. Verfahren nach einem der Ansprüche 11 bis 23, **dadurch gekennzeichnet, daß** der Prägedruck im Schritt b) in der Größenordnung von 250 bar liegt.
